# EUROPÄISCHE PATENTSCHRIFT

(11) **EP 3 192 109 B1**
(45) Veröffentlichungstag und Bekanntmachung des Hinweises auf die Patenterteilung: **08.01.2020**
(21) Anmeldenummer: 15727382.2
(22) Anmeldetag: 03.06.2015
(51) Int. Cl.: H01M 2/10, H01M 10/04, H01M 10/6556, H01M 10/625, H01M 10/647

(54) **ENERGIEBEREITSTELLUNGSMODUL FÜR EINE IN EINEM FAHRZEUG ANGEORDNETE SPANNUNGSVERSORGUNGSVORRICHTUNG**
POWER SUPPLY MODULE FOR A VOLTAGE SUPPLY APPARATUS ARRANGED IN A VEHICLE
MODULE D'ALIMENTATION EN ÉNERGIE POUR UN DISPOSITIF D'ALIMENTATION EN TENSION DISPOSÉ DANS UN VÉHICULE

(30) Priorität: 12.09.2014 DE 102014218330
(43) Veröffentlichungstag der Anmeldung: 19.07.2017
(73) Patentinhaber: Bayerische Motoren Werke Aktiengesellschaft, 80809 München (DE)
(72) Erfinder: HUBER, Michael, 80335 München (DE); HÖFLER, Thomas, 82194 Groebenzell (DE); IDIKURT, Tuncay, 81541 München (DE); WAGNER, Daniel, 80337 München (DE); MUCK, Alexander, 81827 München (DE)
(86) Internationale Anmeldenummer: PCT/EP2015/062324
(87) Internationale Veröffentlichungsnummer: WO 2016/037714

(56) Entgegenhaltungen:
- WO-A1-2011/070758
- WO-A1-2013/083214
- WO-A1-2013/102268
- DE-A1-102012 221 503
- US-A1- 2011 287 285

## Beschreibung

Die Erfindung betrifft ein Energiebereitstellungsmodul für eine in einem Fahrzeug angeordnete Spannungsversorgungsvorrichtung.

Dieses Energiebereitstellungsmodul ist aus einer Vielzahl baulich eigenständig ausgeführter Energiebereitstellungszellen aufgebaut, die zu mindestens einer Zellenreihe gestapelt, hintereinander angeordnet sind. Das Energiebereitstellungsmodul wirkt mit einer Temperiereinrichtung zusammen, die dazu ausgebildet ist, zumindest einen Teil der Energiebereitstellungszellen mittels eines Wärmemittels zu temperieren. Das Energiebereitstellungsmodul weist ferner eine Verspanneinrichtung auf, die dazu ausgebildet ist, die Energiebereitstellungszellen der mindestens einen Zellenreihe zu verspannen, wobei die Verspanneinrichtung hierfür zumindest zwei Endplatten und ein Zugelement aufweist, wobei die mindestens zwei Endplatten mit dem Zugelement zum Ausbilden einer auf die Energiebereitstellungszellen wirkenden Verspannkraft zusammenwirken.

Ein derart aufgebautes Energiebereitstellungsmodul kann in einer Spannungsversorgungsvorrichtung enthalten sein, die in einem Hybridfahrzeug oder Elektrofahrzeug angeordnet ist, und mit der eine in solchen Fahrzeugen als Antriebsmaschine eingesetzte elektrische Maschine mit elektrischer Energie versorgt wird. Bei einem Hybridfahrzeug wird neben der elektrischen Maschine ein weiteres Aggregat für den Antrieb eingesetzt, in der Regel ein Verbrennungsmotor. Wohingegen ein Elektrofahrzeug ausschließlich durch eine elektrische Maschine angetrieben wird. Die zum Einsatz kommenden elektrischen Maschinen sind in der Regel als Innenläufermaschinen ausgelegt, bei denen ein drehbar gelagerter Rotor von einem ortsfesten Stator umschlossen ist. Als Antriebsmaschinen können Synchronmaschinen, insbesondere Hybrid-Synchronmaschinen zum Einsatz kommen.

Ein derart aufgebautes Energiebereitstellungsmodul kann also für den Aufbau einer in einem Hybridfahrzeug oder Elektrofahrzeug verbauten Traktionsbatterie verwendet werden. Bei einer Traktionsbatterie handelt es sich um einen elektrischen Hochvoltspeicher, der ein Spannungsniveau von 250 bis 420 Volt aufweisen kann. Um dieses Spannungsniveau zu erreichen, ist eine Traktionsbatterie aus einer großen Anzahl von in Reihe geschalteter Energiebereitstellungszellen aufgebaut, die vorzugsweise wiederaufladbar ausgeführt sind. Die Energiebereitstellungszellen sind üblicherweise zu kleineren Gruppen, den sogenannten Energiebereitstellungsmodulen zusammengefasst bzw. verschaltet, wobei die Energiebereitstellungsmodule zum Ausbilden der Traktionsbatterie untereinander in Reihe geschaltet sind.

Im Fahrzeugbetrieb ist eine Traktionsbatterie, und somit die in ihr verbauten Energiebereitstellungsmodule bzw. die Energiebereitstellungszellen starken Temperatureinflüssen bzw. Temperaturschwankungen ausgesetzt. Dies rührt zum einen von der Temperaturentwicklung in den Energiebereitstellungszellen selbst her, die an diesen aufgrund der Bereitstellung von elektrischer Energie auftritt. Zum anderen gibt es von außen auf eine Traktionsbatterie einwirkende Faktoren, die die Temperatur der Traktionsbatterie beeinflussen, wie beispielsweise die jahreszeitliche Umgebungstemperatur oder der Einsatzort des Fahrzeugs.

Um einerseits für ein Hybridfahrzeug oder Elektrofahrzeug eine ausreichende Reichweite zu ermöglichen, die entscheidend von der aus einer Traktionsbatterie entnehmbaren elektrischen Energiemenge abhängt, und andererseits eine ausreichende Lebensdauer für die Traktionsbatterie sicherzustellen, ist ein definiertes Temperaturmanagement für die Traktionsbatterie, bzw. allgemeiner formuliert, für eine Spannungsversorgungsvorrichtung bzw. die in ihr verbauten Energiebereitstellungsmodule bzw. Energiebereitstellungszellen erforderlich. Insbesondere ist es erforderlich, die Spannungsversorgungsvorrichtung bzw. die in ihr verbauten Energiebereitstellungsmodule zu kühlen, um diese in einem optimalen Temperaturbereich betreiben zu können. Je nach Einsatzbedingungen kann es aber auch erforderlich sein, die Spannungsversorgungsvorrichtung bzw. die in ihr verbauten Energiebereitstellungsmodule zu heizen.

Zu diesem Zweck sind die Außenflächen der Energiebereitstellungszellen üblicherweise mit Temperierelementen verbunden, mit denen unter Verwendung eines Wärmemittels, das auch als Wärmeträger bezeichnet werden kann, die Temperatur der Energiebereitstellungszellen einstellbar ist. Insbesondere handelt es sich hierbei um Kühlelemente, mit denen die Energiebeunter Verwendung eines Fluids, insbesondere einer Flüssigkeit gekühlt werden können. Bei dem Fluid kann es sich aber auch um ein Gas oder ein Gemisch bzw. eine Mischung, bestehnd aus mindestens einem Gas und mindestens einer Flüssigkeit, handeln. Beispielsweise handelt es sich bei Kältemittel um sogenannte Zweiphasengemische, bestehend aus zumindest einem Gas und zumindest einer Flüssigkeit. Diese Temperierelemente bzw. Kühlelemente können unterschiedlich ausgeführt sein. Beispielsweise können sie als Kühlplatte mit innenliegenden Fluidkanälen ausgeführt sein. Alternativ können diese Elemente unter Verwendung eines Strangpressprofils realisiert sein. Wie bereits ausgeführt, können die Energiebereitstellungszellen gekühlt und/oder geheizt werden. Insofern kann das Wärmemittel auch als Temperiermittel bezeichnet werden. Wenn nachfolgend der Begriff Wärmemittel verwendet wird, so soll dieser synonym für die Begriffe Wärmeträger bzw. Temperiermittel stehen.

Bisher handelt es sich bei den Temperierelementen bzw. Kühlelementen zumeist um zusätzlich in einem Energiebereitstellungsmodul verbaute Bauteile bzw. Komponenten, die zur Realisierung einer wirksamen Temperierung bzw. Kühlung der Energiebereitstellungszellen durch Anpressen und/oder Verkleben mit diesen verbunden sind. In der Regel dienen solche Temperierelemente bzw. Kühlelemente lediglich dem Temperieren bzw. Kühlen der Energiebereitstellungszellen. Sie übernehmen bzw. haben innerhalb des Energiebereitstellungsmoduls keine weitere Funktion. Die Tatsache, dass es sich bei den Temperierelementen bzw. Kühlelementen um eigenständige Bauteile bzw. Komponenten handelt, die innerhalb eines Energiebereitstellungsmoduls neben dem Temperieren bzw. Kühlen keine weitere Funktion erfüllen, bringt folgende Nachteile mit sich: Zum einen ist innerhalb eines Energiebereitstellungsmoduls zusätzlicher Bauraum für diese "zusätzlichen" Temperierelemente bzw. Kühlelemente vorzusehen, weswegen ein erhöhter Bauraumbedarf besteht. Das Energiebereitstellungsmodul könnte eigentlich kleiner bauend bzw. kompakter ausgeführt werden. Zum anderen bewirken diese "zusätzlichen" Temperierelemente bzw. Kühlelemente zusätzliches Gewicht, das Energiebereitstellungsmodul ist unnötig schwer, es könnte leichter bauend ausgeführt werden.

WO 2013/083214 A1 beschreibt einen Zellenblock für eine Batterie, mit einer Mehrzahl seriell und/oder parallel elektrisch verschalteter, elektrisch miteinander verschalteter elektrochemischer Einzelzellen, welche als Flachzellen ausgebildet sind, im Zellblock im Wesentlichen parallel zueinander ausgerichtet und hintereinander angeordnet sind und mittels zumindest eines Spannelements miteinander verspannt sind. Das Spannelement ist als eine Temperierplatte zur Temperierung der Einzelzellen ausgebildet, welche an einer Längsseite des Zellblocks angeordnet und mit den Einzelzellen thermisch gekoppelt ist.

WO 2011/070758 A1 beschreibt einen oberen Drehkörper, welcher drehbar an einem unteren Fahrkörper einer Arbeitsmaschine angeordnet ist. Ein Speicherbatteriemodul ist an dem oberen Drehkörper befestigt. Das Speicherbatteriemodul hat eine Vielzahl von plattenförmigen Speicherbatteriezellen, die in eine Z-Richtung gestapelt sind und in einem rechtwinkligem XYZ-Koordinatensystem definiert sind. Zumindest eine Wärmeübertragungsplatte ist zwischen den Speicherbatteriezellen angeordnet. Druckplatten, die an beiden Enden der Stapelstruktur der Speicherbatteriezellen angeordnet sind, bringen eine Druckkraft in Stapelrichtung auf die Speicherbatteriezellen auf. Eine erste Wandplatte und eine zweite Wandplatte drücken den gestapelten Körper in der Y-Richtung zusammen und sind an den Druckplatten befestigt. Die Positionen der Wärmeübertragungsplatten sind bezüglich der ersten Wandplatte und der zweiten Wandplatte eingeschränkt.

Es ist daher eine Aufgabe der vorliegenden Erfindung, eine Energiebereitstellungsmodul zu schaffen, das klein und leicht bauend ausgeführt ist, das einfach und kostengünstig herzustellen ist, aber dennoch eine zuverlässige Temperierung der in dem Energiebereitstellungsmodul verbauten Energiebereitstellungszellen ermöglicht.

Bevor auf vorteilhafte Ausgestaltungen des erfindungsgemäßen Energiebereitstellungsmoduls eingegangen wird, soll zunächst noch eine Überlegung hinsichtlich der Integration bzw. dem Zusammenführen der beiden Funktionalitäten Temperieren bzw. Kühlen der Energiebereitstellungszellen einerseits und Verspannen der Energiebereitstellungszellen andererseits angestellt werden. Im Sinne der Erfindung ist es unerheblich, wie dieses Integrieren bzw. Zusammenführen erfolgt. Bei einem ersten Ansatz bzw. einer ersten Betrachtungsweise kann ein Zugelement so ausgebildet sein, dass es zusätzlich zu seiner ursprünglichen Funktionalität, nämlich der des Verspannens, noch die zusätzliche Funktionalität des Temperierens bzw. Kühlens übernimmt bzw. aufweist. D.h. ein Zugelement ist so ausgebildet, dass es gleichzeitig als Kühlelement bzw. Temperierelement eingesetzt werden kann. Demzufolge muss in einem Energiebereitstellungsmodul kein eigenständig ausgebildetes Temperierelement bzw. Kühlelement verbaut werden.

Bei einem zweiten Ansatz bzw. einer zweiten Betrachtungsweise kann ein Temperierelement bzw. Kühlelement so ausgebildet sein, dass es zusätzlich zu seiner ursprünglichen Funktionalität, nämlich der des Temperierens bzw.

Kühlens, noch die zusätzliche Funktionalität des Verspannens übernimmt bzw. aufweist. D.h. ein Temperierelement bzw. Kühlelement ist so ausgebildet, dass es gleichzeitig als Zugeelement eingesetzt werden kann. Demzufolge muss in einem Energiebereitstellungsmodul kein eigenständig ausgebildetes Zugelement verbaut werden. Ein derart ausgebildetes Temperierelement bzw. Kühlelement kann gleichzeitig als Zugelement dienen. Alternativ kann solch ein Element ein bereits vorhandenes Zugelement in seiner Funktionalität des Verspannens unterstützen, wobei das zu unterstützende Zugelement seitlich oder oberhalb und unterhalb der Energiebepositioniert sein kann. Beiden Ansätzen bzw. Betrachtungsweisen ist gemein: dadurch dass entweder ein Zugelement die zusätzliche Funktionalität des Temperierens bzw. Kühlens aufweist bzw. übernimmt, oder dadurch dass ein Temperierelement bzw. Kühlelement die zusätzliche Funktionalität des Verspannens aufweist bzw. übernimmt, existiert ein einziges Bauteil bzw. eine einzige Komponente, die sowohl die Funktionalität eines Zugelements als auch die Funktionalität eines Temperierelements bzw. Kühlelements übernimmt bzw. in sich vereint. Demzufolge kann beim Aufbau eines Energiebereitstellungsmoduls auf ein Bauteil bzw. eine Komponente verzichtet werden. An dieser Stelle sei nochmals angemerkt, dass beide Ansätze bzw. Betrachtungsweisen als absolut gleichwertig anzusehen sind. Aufgrund der Vereinigung der beiden Funktionalitäten in einem Bauteil bzw. in einer Komponente kann dieses Bauteil bzw. diese Komponente auch als integriertes Zug- und Temperierelement bezeichnet werden.

Im Automobilbereich können für den Aufbau einer Traktionsbatterie sowohl Energiespeicherzellen als auch Energiewandlerzellen als Energiebereitstellungszellen zum Einsatz kommen. Bei den Energiespeicherzellen kann es sich beispielsweise um wieder aufladbare Lithium-Ionen-Speicherzellen handeln, die vorzugsweise in einem prismatisch ausgebildeten festen Metallgehäuse mit einer Wandstärke von 0,3 bis 0,5 Millimeter (derartige Gehäuse werden auch als Hardcase bezeichnet) oder in einem aus AluminiumVerbundfolie bestehenden Gehäuse (solche Gehäuse werden auch als Pouch- oder Softpack bezeichnet) untergerbacht sind. Bei derart untergebrachten Lithium-Ionen-Speicherzellen besteht die Notwendigkeit, die Energiespeicherzellen mit einer bestimmten Kraft zu verspannen, um ein "Ausbauchen" dieser Zellen zu begrenzen und damit eine vorzeitige Alterung der Zellen zu vermeiden. Dies bedeutet, dass bei Energiebereitstellungsmodulen, bzw. in diesem Fall genauer gesagt bei Energiespeichermodulen, die mittels vorgenannter Lithium-Ionen-Speicherzellen aufgebaut sind, per se eine Verspanneinrichtung zum Einsatz kommt, die aus zwei Endplatten und mindestens einem Zugelement besteht, vorzugsweise weist solch ein Modul zwei Zugelemente auf, die jeweils als Zuganker ausgebildet sind. Demzufolge ist die Möglichkeit gegeben, die Funktionalität des Temperierens bzw. Kühlens in zumindest eine Komponente der Verspanneinrichtung zu integrieren. Neben den vorgenannten Lithium-lonen-Speicherzellen kann ein erfindungsgemäßes Energiebereitstellungsmodul auch bei Lithium-Polymer- oder bei Lithium-Schwefel- oder bei Lithium-Luft Speicherzellen oder bei anderen Energiespeicherzellen, bei denen ein Verspannen sinnvoll ist, zum Einsatz kommen. Die Energiewandlerzellen können vorzugsweise in Form von Brennstoffzellen realisiert sein. Auch Brennstoffzellen werden in der Regel verspannt, so dass auch hier eine Integration der Funktionalität Temperieren bzw. Kühlen in eine entsprechend vorzusehende bzw. vorhandene Verspanneinrichtung möglich ist.

Dadurch dass das erfindungsgemäß zum Einsatz kommende Zugelement zumindest einen Zuleitungsanschluss zum Zuleiten von Wärmemittel in das Zugelement und zumindest einen Ausleitungsanschluss zum Ausleiten des durch zumindest einen Teilbereich des Zugelements geströmten Wärmmittels aufweist, handelt es sich um ein Zugelement, das mit Blick auf das Temperieren bzw. Kühlen eines Energiebereitstellungsmoduls aktiv ausgebildet ist. Es handelt sich um ein Zugelement, bei dem die Wärmeübertragung hauptsächlich mittels Konvention erfolgt. Im Gegensatz zu herkömmlich ausgebildeten Zugelementen, insbesondere Zugankern, bei denen eine Wärmeübertragung allenfalls mittels Wärmeleitung oder Wärmestrahlung und somit passiv erfolgt. Es ist somit auch der Aufbau eines Energiebereitstellungsmoduls denkbar, bei dem gleichzeitig konventionelle, d.h. passiv ausgebildete Zugelemente und erfindungsgemäße, d.h. aktiv ausgebildete Zugelemente zum Einsatz kommen, wobei die erfindungsgemäßen Zugelemente die konventionellen Zugelemente in ihrer Verspannungsfunktionalität unterstützen.

Vorzugsweise weist das Zugelement sowohl eine Vielzahl von Zuleitungsanschlüssen als auch eine Vielzahl von Ausleitungsanschlüssen auf. Mit dieser Maßnahme kann beispielsweise bei einer Direktkältemittelkühlung eine sogenannte Winterverschaltung realisiert werden, bei der das Zugelement als interner Wärmetauscher fungiert.

Vorzugsweise sind das Zugelement und somit dessen Zuleitungsanschlüsse und Ableitungsanschlüsse dazu ausgebildet, von einem flüssigen Wärmemittel durchströmt bzw. passiert zu werden. Es ist aber auch eine entsprechende Ausgestaltung denkbar, bei der ein Durchströmen mit Gas oder einem Gemisch möglich ist.

Konsequenterweise weist das Zugelement mindestens einen das Wärmemittel führenden Wärmemittelkanal auf. Vorzugsweise soll es sich um ein Zugelement handeln, das aus flächigen bzw. durchgängigen Zugelementkomponenten aufgebaut ist, in deren Inneren sich der mindestens eine Wärmemittelkanal befindet. Handelt es sich beispielsweise um Lithium-Ionen-Speicherzellen, die in einem prismatisch ausgebildeten festen Metallgehäuse untergebracht sind, so weisen diese Energiebereitstellungszellen, genauer gesagt die Energiespeicherzellen eine Höhe auf, die dem Abstand zwischen dem Boden der Zelle und dem die Anschlüsse aufweisenden Deckel der Zelle entspricht. Das Zugelement und somit seine Zugelementkomponenten sollen nun eine an diese Höhe angepasste Breite aufweisen, wobei die Zugelementkomponenten über diese Breite flächig bzw. durchgängig ausgebildet sein sollen. Vorzugsweise sind die Zugelementkomponenten als sogenannte Hohlkammerprofile ausgebildet, die mindestens eine in Längsrichtung verlaufende Kammer aufweisen, wobei es sich bei dieser Kammer um den Wärmemittelkanal handelt. Vorzugsweise soll das Zugelement so ausgebildet sein, dass es drei Seiten einer Zellenreihe umschließt, vorzugsweise die beiden Längsseiten und eine der beiden Querseiten. Demzufolge ist der Wärmemittelkanal derart ausgebildet, dass er die Zellenreihe zumindest teilumfänglich umschließt, nämlich entlang der beiden Längsseiten und einer Querseite.

In einer alternativen Ausgestaltung weist das Zugelement eine Vielzahl baulich eigenständig ausgebildeter, strömungstechnisch parallel- oder gegenstromgeschalteter Wärmemittelkanäle auf. Bei dieser Ausgestaltung sind die einzelnen Zugelementkomponenten nicht flächig bzw. durchgängig über die vorstehend beschriebene Breite ausgebildet. Vielmehr setzt sich das Zugelement aus mehreren, baulich eigenständig ausgebildeten Strängen zusammen, wobei jeder dieser Stränge als Hohlkammerprofil ausgebildet sein kann. Die einzelnen Stränge sollen dabei mit Blick auf ein Durchströmen des Wärmemittels strömungstechnisch parallel- oder gegenstromgeschaltet sein.

Durch den Einsatz von Hohlkammerprofilen für den Aufbau des Zugelements ist zum einen ein einfacher und kostengünstiger Aufbau des Energiebereitstellungsmodul möglich, und zum anderen ist eine zuverlässige Temperierung der Energiebereitstellungszellen sichergestellt.

In einer bevorzugten Ausgestaltung der Erfindung ist das Zugelement aus zumindest einem Querelement und zumindest zwei Längselementen mit jeweils einem querelementseitigen Ende und einem freien Ende aufgebaut, wobei der zumindest eine Zuleitungsanschluss und der zumindest eine Ausleitungsanschluss räumlich den freien Enden zugeordnet sind. Diese Maßnahme ermöglicht eine zuverlässige Temperierung der Energiebereitstellungszellen, da sich durch die einheitliche Anbringung bzw. Orientierung der Anschlüsse das Verschalten der einzelnen Zugelemente mit anderen zu der Temperiereinrichtung gehörenden Komponenten einfach bzw. unaufwändig gestaltet. Vorzugsweise kann vorgesehen sein, dass ein Längselement beide Anschlüsse aufweist. Alternativ kann vorgesehen sein, dass der zumindest eine Zuleitungsanschluss dem freien Ende des einen Längselements und der zumindest eine Ausleitungsanschluss dem freien Ende des anderen Längselements zugeordnet ist. Dadurch ergibt sich eine größere Flexibilität beim Verschalten der einzelnen Zugelemente mit anderen zu der Temperiereinrichtung gehörenden Komponenten.

In einer bevorzugten Ausgestaltung der Erfindung weist zumindest eines der beiden Längselemente ein an seinem freien Ende angeordnetes Anschlusselement auf, wobei das Anschlusselement den zumindest einen Zuleitungsanschluss und/oder den zumindest einen Ausleitungsanschluss aufweist. Diese Maßnahme trägt zum einen zu einem einfachen Aufbau des Zugelements und somit des Energiebereitstellungsmoduls bei. Zum anderen ermöglicht diese Maßnahme eine zuverlässige Temperierung der Energiebereitstellungszellen. Sowohl das Anschlusselement als auch das Längselemente können speziell mit Blick auf die jeweiligen Anforderungen konzipiert und dann auch gefertigt werden. Somit ist beispielswiese sichergestellt, dass jeweils der für die Erfüllung der jeweiligen Anforderung am besten geeignete Aufbau gewählt werden kann. Entsprechend kann auch eine fertigungstechnische Optimierung vorgenommen werden, was ein kostengünstiges Herstellen des Zugelements und somit des Energiebereitstellungsmoduls ermöglicht. Vorzugsweise weisen beide Längselemente ein Anschlusselement auf, wobei das eine Längselemente dann den Zuleitungsanschluss und das andere Längselement den Ausleitungsanschluss aufweist. Diese Maßnahme ermöglicht eine größere Flexibilität beim Verschalten der einzelnen Zugelemente mit anderen zu der Temperiereinrichtung gehörenden Komponenten.

In einer weiteren vorteilhaften Ausgestaltung der zuvor genannten Maßnahme ist das Anschlusselement zylinderförmig mit einem Anschlusselementboden, einem Anschlusselementdeckel und einem Anschlusselementmantel ausgebildet, wobei sich der zumindest eine Zuleitungsanschluss und/oder der zumindest eine Ausleitungsanschluss in dem Anschlusselementboden oder dem Anschlusselementmantel oder dem Anschlusselementdeckel befindet. Vorzugsweise weist das zylinderförmige Anschlusselement eine kreisförmige Grundfläche auf, wodurch sich vielfältige Anbringungsmöglichkeiten bzw. Ausrichtungen für den Zuleitungsanschluss bzw. den Ausleitungsanschluss ergeben, was insbesondere dann der Fall ist, wenn der Zuleitungsanschluss bzw. der Ausleitungsanschluss auf dem Anschlusselementmantel angeordnet ist. Vorzugsweise sind der Zuleitungsanschluss bzw. der Ausleitungsanschluss so auf dem Anschlusselementmantel angeordnet, dass der jeweilige Anschluss in Richtung der Längsachse der Zellenreihe zeigt. In diesem Fall können die Anschlüsse von einer Richtung aus "bedient", d.h. mit Koppelementen, beispielsweise Leitungen verbunden bzw. bestückt werden, über die die einzelnen Zugelemente mit anderen zu der Temperiereinrichtung gehörenden Komponenten dann verschaltet sind. Die alternative Anordnung des Zuleitungsanschlusses bzw. des Ausleitungsanschlusses in dem Anschlusselementboden oder dem Anschlusselementdeckel ermöglicht einen sehr kompakten Aufbau der Spannungsversorgungsvorrichtung, da es dadurch beispielsweise möglich ist, die Energiebereitstellungsmodule innerhalb der Spannungsversorgungsvorrichtung übereinander zu stapeln.

Dadurch dass das Zugelement aus mindestens einem Querelement und mindestens zwei Längselementen mit jeweils einem querelementseitigen Ende und einem freien Ende aufgebaut ist, weist jede der Zellenreihen konsequenterweise eine querelementseitige Energiebereitstellungszelle und eine freie Energiebereitstellungszelle auf, wobei eine der beiden Endplatten als querelementseitige Endplatte an der querelementseitigen Energiebereitstellungszelle und die andere Endplatte als freie Endplatte an der freien Energiebereitstellungszelle anliegt. Vorteilhafterweise ist die querelementseitige Endplatte dazu ausgebildet, in der Zellenreihe auftretende Längentoleranzen auszugleichen. Mit dieser Maßnahme können fertigungsbedingte unterschiedliche Dicken in den Energiebereitstellungszellen ausgeglichen werden, wodurch ein verlässliches Verspannen und somit auch Temperieren der Zellen sichergestellt ist. Vorzugsweise ist die querelementseitige Endplatte derart ausgebildet, beispielsweise durch Einlagerung elastischer Elemente, dass sie in einem gewissen Umfang eine Federwirkung aufweist. In einer anderen Betrachtungsweise weist die Zellenreihe eine anfangsseitige Energiebereitstellungszelle und eine endseitige Energiebereitstellungszelle auf, wobei eine der beiden Endplatten als anfangsseitige Endplatte an der anfangsseitigen Energiebereitstellungszelle und die andere Endplatte als endseitige Endplatte an der endseitigen Energiebereitstellungszelle anliegt. In diesem Fall soll die endseitige Endplatte dazu ausgebildet sein, in der Zellenreihe auftretende Längentoleranzen auszugleichen.

In einer vorteilhaften Ausgestaltung der Erfindung sind die Energiebereitstellungszellen zu einer einzigen Zellenreihe oder zu einer Vielzahl von in einer Ebene liegenden, nebeneinander angeordneten Zellenreihen angeordnet, wobei das Zugelement aus einem Querelement und zwei Längselementen mit jeweils einem querelementseitigen Ende und einem freien Ende aufgebaut ist, wobei das Querelement und die beiden Längselemente ein Zugelement ausbilden, das eine der beiden Endplatten umschließt. Aufgrund dieser Anordnung des Querelements und der beiden Längselementen handelt es sich um ein u-förmig ausgestaltetes Zugelement, das die querelementseitige bzw. endseitige Endplatte umschließt. Dieses Zugelement ist einfach herzustellen und bei der Montage des Energiebereitstellungsmoduls einfach zu handhaben, was insgesamt dazu führt, dass das Energiebereitstellungsmodul zum einen kostengünstig herzustellen ist und zum anderen ein zuverlässiges Temperieren der Energiebereitstellungszellen ermöglicht. Das u-förmig ausgestaltete Zugelement zeichnet sich durch eine minimale Anzahl von Fügestellen aus.

Sind die Energiebereitstellungszellen zu einer Vielzahl von in einer Ebene liegenden, nebeneinander angeordneten Zellenreihen angeordnet, so kann in einer anderen vorteilhaften Ausgestaltung der Erfindung das Zugeelement aus mindestens zwei Querelementen, zwei Längselementen mit jeweils einem querelementseitigen Ende und einem freien Ende und mindestens einem weiteren Längselement mit zwei querelementseitigen Enden aufgebaut sein, wobei die Querelemente, die Längselemente und das mindestens eine weitere Längselemente ein mäanderförmiges Zugelement ausbilden. Ein derart ausgeführtes Zugelement ist mäanderförmig durch die Zellenreihen hindurch geführt. Im Vergleich zu dem zuvor beschriebenen Zugelement ist ein derart aufgebautes Zugelement in seiner Herstellung zwar nicht ganz so kostengünstig, ermöglicht jedoch ein verbessertes Temperieren der Energiebereitstellungszellen.

In einer besonders bevorzugten Ausgestaltung der zuvor genannten Maßnahme ist das weitere Längselement dazu ausgebildet, ebenfalls von dem Wärmemittel durchströmt zu werden. Mit Hilfe dieser, hinsichtlich der Wärmeübertragung aktiv ausgebildeten weiteren Längselemente können die Energiebereitstellungszellen bestmöglichst temperiert werden. Anstelle aktiv ausgebildeter weiterer Längselement können auch passiv ausgebildete weitere Längselemente verwendet werden, also solche weiteren Längselemente, wie man sie von herkömmlichen, d.h. passiv ausgebildeten Zugankern her kennt. Kommen passiv ausgebildete weitere Längselemente zum Einsatz, so ist eine andere Anordnung der Zuleitungsanschlüsse und Ausleitungsanschlüsse erforderlich, bspw. können diese an einem der Querelemente angebracht sein.

In einer weiteren bevorzugten Ausgestaltung der Erfindung liegen die Längselemente mit ihren freien Enden an der jeweils zugeordneten Endplatte seitlich an. In einer ersten Ausgestaltung können die Längselemente und die Endplatte kraftschlüssig miteinander verbunden sein, wodurch sich das Energiebereitstellungsmodul besonders kostengünstig herstellen lässt. Die kraftschlüssige Verbindung kann beispielsweise durch eine entsprechende eine Vorspannung bewirkende Dimensionierung oder Formgebung der Längselemente erreicht werden. Alternativ können die Längselemente und die Endplatten stoffschlüssig, beispielsweise mittels Schweißen oder Kleben, oder formschlüssig, mittels Nieten oder Clinchen, miteinander verbunden ein.

In einer vorteilhaften Ausgestaltung der Erfindung liegt das Zugelement über eine Wärmeleitkomponente an den Energiebereitstellungszellen an. Durch diese Maßnahme ist ein optimaler Wärmeübergang zwischen den Energiebe-und dem Zugelement und somit ein optimales Temperieren der Energiebereitstellungszellen sichergestellt. Als Wärmeleitkomponente kann beispielsweise eine Wärmeleitfolie, Wärmeleitkleber oder ein sogenanntes Phasenwechselmaterial (Phase Change Material) zum Einsatz kommen. Ein Phasenwechselmaterial zeichnet sich dadurch aus, dass die Schmelzwärme oder Lösungswärme oder Absorptionswärme wesentlich größer ist als diejenige Wärme, die es aufgrund seiner normalen spezifischen Wärmekapazität, also ohne die Phasenumwandlungseffekt, speichern kann.

Unter Verwendung eines erfindungsgemäßen Energiebereitstellungsmoduls lässt sich eine Spannungsversorgungsvorrichtung aufbauen, die dazu eingerichtet ist, in einem Fahrzeug eine Versorgungsspannung bereitzustellen. Bei dem erfindungsgemäßen Energiebereitstellungsmodul kommt dabei ein erfindungsgemäß ausgebildetes Zugelement zum Einsatz, ein Zugelement also, das hinsichtlich der Wärmeübertragung aktiv ausgebildet ist.

Wie bereits ausgeführt, erfolgt bei dem erfindungsgemäßen Energiebereitstellungsmodul das Temperieren der Energiebereitstellungszellen mittels eines Wärmemittels. Bei dem Wärmemittel kann es sich um ein Kühlmittel oder um ein Kältemittel handeln.

Ausführungsbeispiele der Erfindung sind in der Zeichnung dargestellt und werden in der nachfolgenden Beschreibung näher erläutert. Es zeigen:
- Fig. 1: anhand einer schematischen Darstellung den prinzipiellen Aufbau einer in einem Fahrzeug angeordneten Spannungsversorgungsein-richtung bei der erfindungsgemäße Energiebereitstellungsmodule verbaut sind,
- Fig. 2: anhand einer schematischen Darstellung den prinzipiellen Aufbau eines Energiebereitstellungsmoduls,
- Fig. 3: anhand einer schematischen Darstellung eine erste Ausführungsform eines Energiebereitstellungsmoduls,
- Fig. 4: anhand zweier Teilfiguren zwei unterschiedliche Ausführungsformen eines Anschlusselements,
- Fig. 5: anhand einer schematischen Darstellung eine zweite Ausführungs-form eines Energiebereitstellungsmoduls,
- Fig. 6: anhand zweier Teilfiguren mittels einer schematischen Darstellung eine dritte Ausführungsform eines Energiebereitstellungsmoduls,
- Fig. 7: anhand zweier Teilfiguren mittels einer schematischen Darstellung eine vierte Ausführungsform eines Energiebereitstellungsmoduls,
- Fig. 8: anhand einer schematischen Darstellung eine fünfte Ausführungs-form eines Energiebereitstellungsmoduls,
- Fig. 9: anhand einer schematischen Darstellung eine sechste Ausführungs-form eines Energiebereitstellungsmoduls,
- Fig. 10: anhand einer schematischen Darstellung eine siebte Ausführungs-form eines Energiebereitstellungsmoduls, und
- Fig. 11: anhand einer schematischen Darstellung eine achte Ausführungs-form eines Energiebereitstellungsmoduls.

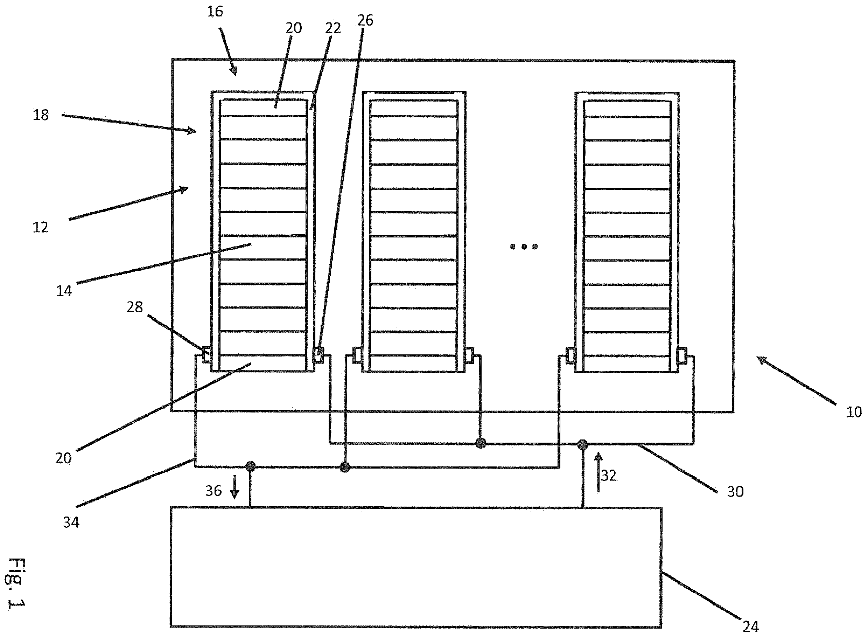

Fig. 1 zeigt eine Spannungsversorgungseinrichtung 10, die in einem nicht dargestellten Fahrzeug angeordnet ist. Die Spannungsversorgungseinrichtung 10 enthält eine Vielzahl von Energiebereitstellungsmodulen, von denen eines exemplarisch mit dem Bezugszeichen 12 gekennzeichnet ist. Jedes dieser Energiebereitstellungsmodule 12 ist aus einer Vielzahl baulich eigenständig ausgeführter Energiebereitstellungszellen aufgebaut, von denen eine exemplarisch mit dem Bezugszeichen 14 gekennzeichnet ist. Bei den Energiebereitstellungszellen 14 kann es sich um Energiespeicherzellen oder um Energiewandlerzellen handeln. Vorzugsweise soll es sich um Energiespeicherzellen handeln, die als wieder aufladbare Lithium-Ionen-Speicherzellen ausgebildet sind. Für jedes der Energiebereitstellungsmodule sind die Energiebereitstellungszellen zu mindestens einer Zellenreihe 16 angeordnet. Die in Fig. 1 gewählte Darstellung, gemäß der sämtliche Energiebereitstellungsmodule einreihig ausgeführt sind, soll keine einschränkende Wirkung haben. Selbstverständlich können die Energiebereitstellungsmodule auch mehrreihig ausgeführt sein. Es ist auch denkbar, dass bei einer Spannungsversorgungseinrichtung gleichzeitig einreihig und mehrreihige ausgeführt Energiebereitstellungsmodule zum Einsatz kommen können.

Jedes der Energiebereitstellungsmodule 12 weist eine Verspanneinrichtung 18 auf, die dazu ausgebildet ist, die jeweiligen Energiebereitstellungszellen 14 zu verspannen. Hierfür weist die Verspanneinrichtung 18 zumindest zwei Endplatten 20 und ein Zugelement 22 auf. Die beiden Endplatten 20 und das Zugelement 22 wirken zum Ausbilden einer auf die Energiebereitstellungszellen 14 wirkenden Verspannkraft zusammen.

Die Energiebereitstellungsmodule 12 wirken jeweils mit einer Temperiereinrichtung 24 zusammen, die dazu ausgebildet ist, zumindest einen Teil der Energiebereitstellungszellen 14 mittels eines Wärmemittels zu temperieren. Dabei ist vorgesehen, dass das Zugelement 22 als funktionaler Bestandteil der Temperiereinrichtung 24 ausgebildet ist. Zu diesem Zweck weist das Zugelement 22 zumindest einen Zuleitungsanschluss 26 zum Zuleiten von Wärmemittel in das Zugelement 22 und zumindest einen Ausleitungsanschluss 28 zum Ausleiten des durch zumindest einen Teilbereich des Zugelements 22 geströmten Wärmemittels auf. Der Zuleitungsanschluss 26 steht über eine erste Leitung 30 mit der Temperiereinrichtung 24 in Verbindung, wobei über die erste Leitung 30 Wärmemittel von der Temperiereinrichtung 24 dem Zugelement 22 zugeführt wird, was durch einen Pfeil 32 angedeutet ist. Der Ausleitungsanschluss 28 steht über eine zweite Leitung 34 mit der Temperiereinrichtung 24 in Verbindung, wobei über die zweite Leitung 34 Wärmemittel von dem Zugelement 22 der Temperiereinrichtung 24 zugeführt wird, was durch einen Pfeil 36 angedeutet ist. Das Zugelement 22 weist mindestens einen das Wärmemittel führenden, in Fig. 1 nicht einsehbaren Wärmemittelkanal auf.

Fig. 1 ist eine Anzahl von Energiebereitstellungszellen zu entnehmen, aus denen ein Energiebereitstellungsmodul aufgebaut ist. Diese der Fig. 1 entnehmbare Anzahl soll keine einschränkende Wirkung haben. Selbstverständlich kann ein Energiebereitstellungsmodul auch eine andere Anzahl von Energiebereitstellungszellen aufweisen. Auf den konkreten Aufbau der Temperiereinrichtung 24 soll im Rahmen dieser Erfindung nicht weiter eingegangen werden. Es ist selbstredend, dass die Temperiereinrichtung 24 diejenigen Komponenten enthält, die notwendig sind, um Energiebereitstellungszellen mit Hilfe eines Kältemittels oder Kühlmittels temperieren zu können.

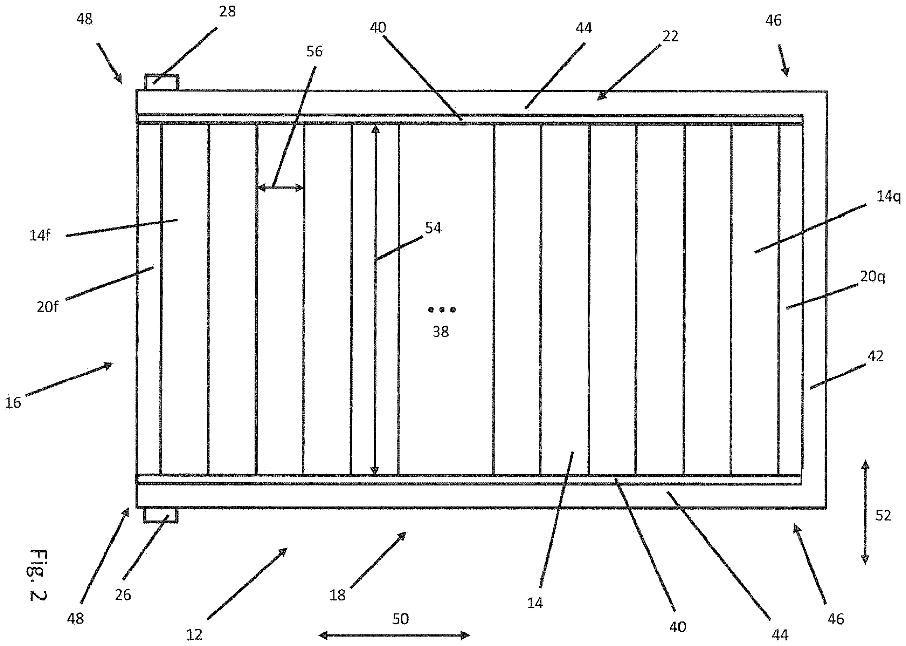

Fig. 2 zeigt ein Energiebereitstellungsmodul 12, das aus einer Vielzahl baulich eigenständig ausgeführter Energiebereitstellungszellen 14 aufgebaut ist. Die Energiebereitstellungszellen 14 sind zu einer Zellenreihe 16 angeordnet. Durch Punkte 38 ist angedeutet, dass das Energiebereitstellungsmodul 12 aus einer beliebigen Anzahl von Energiebereitstellungszellen aufgebaut sein kann. Die Energiebereitstellungszellen 14 sind zwischen zwei Endplatten 20f, 20q angeordnet, die mit einem Zugelement 22 zum Ausbilden einer auf die Energiebereitstellungszellen 14 wirkenden Verspannkraft zusammenwirken. Wie der Darstellung in Fig. 2 zu entnehmen ist, liegt das Zugelement 22 über eine Wärmeleitkomponente 40 an den Energiebereitstellungszellen 14 an. Die Wärmeleitkomponente 40 kann als Wärmeleitfolie, als Wärmeleitkleber oder als sogenanntes Phasenwechselmaterial ausgebildet sein. Durch die Wärmeleitkomponente 40 ist ein optimaler Wärmeübergang von den Energiebereitstellungszellen 14 hin zu dem Zugelement 22 sichergestellt.

Wie der Darstellung in Fig. 2 weiter zu entnehmen ist, ist das Zugelement 22 aus zumindest einem Querelement 42 und zumindest zwei Längselementen 44 mit jeweils einem querelementseitigen Ende 46 und einem freien Ende 48 aufgebaut. Wie der Darstellung ferner zu entnehmen ist, sind der Zuleitungsanschluss 26 und der Ausleitungsanschluss 28 räumlich den freien Enden 48 zugeordnet.

Die Zellenreihe 16 weist eine querelementseitige Energiebereitstellungszelle 14q und eine freie Energiebereitstellungszelle 14f auf, wobei eine der beiden Endplatten als querelementseitige Endplatte 20q an der querelementseitigen Energiebereitstellungszelle 14q und die andere Endplatte als freie Endplatte 20f an der freien Energiebereitstellungszelle 14f anliegt. In einer vorteilhaften Ausgestaltung soll die querelementseitige Endplatte 14q dazu ausgebildet sein, in der Zellenreihe 16 auftretende Längentoleranzen auszugleichen.

Wie der Darstellung in Fig. 2 zu entnehmen ist, weist das Energiebereitstellungsmodul 12 bzw. die Zellenreihe 16 eine Längsachse 50 und eine Querachse 52 auf. Die Energiebereitstellungszellen 14 weisen eine Länge 54, eine Breite 56 und eine in Fig. 2 nicht dargestellte, weil aus der Zeichenebene heraustretende Höhe 58 auf.

Die in den Fig. 1 und 2 gezeigte Anordnung des Zuleitungsanschlusses 26 und des Ausleitungsanschlusses 28 an dem Zugelement 22 soll keine einschränkende Wirkung haben. Auf die Anordnung dieser beiden Anschlüsse wird im Zusammenhang mit den nachfolgend noch zu beschreibenden Figuren ausführlich eingegangen.

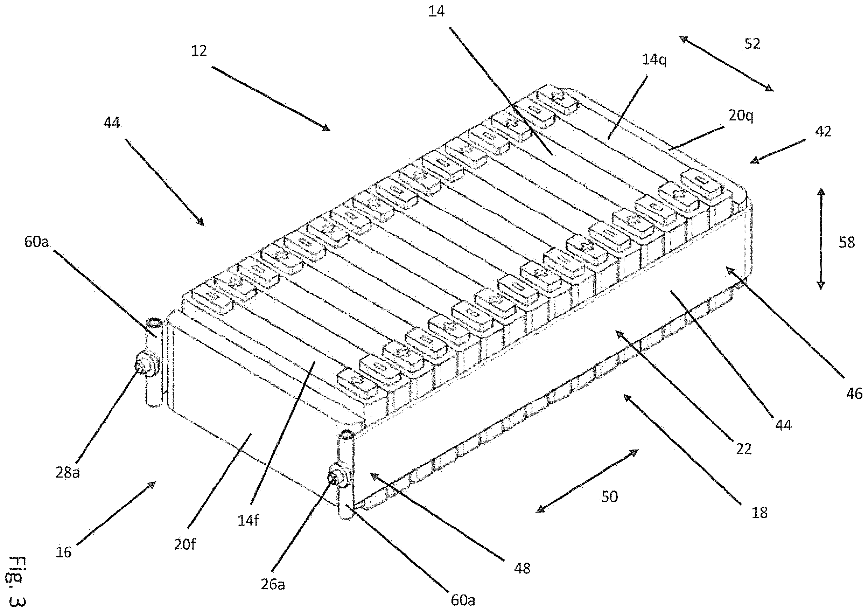

Fig. 3 zeigt eine erste Ausführungsform eines Energiebereitstellungsmoduls 12. Bei dieser Ausführungsform sind die Energiebereitstellungszellen 14 zu einer einzigen Zellenreihe 16 angeordnet, wobei das Zugelement 22 aus einem Querelement 42 und zwei Längselementen 44 mit jeweils einem querelementseitigen Ende 46 und einem freien Ende 48 aufgebaut ist. Das Querelement 42 und die beiden Längselemente 44 bilden ein Zugelement 22 aus, das die Endplatte 20q umschließt. In das Zugelement ist mindestens ein nicht dargestellter, das Wärmemittel führender Wärmemittelkanal eingearbeitet. Die beiden Längselemente 44 liegen mit ihren freien Enden 48 seitlich an der Endplatte 20f an. Die Längselemente 44 und die Endplatte 20f können kraftschlüssig oder stoffschlüssig oder formschlüssig miteinander verbunden sein.

Wie der Darstellung in Fig. 3 zu entnehmen ist, weisen die beiden Längselemente 44 an ihren freien Enden 48 jeweils ein Anschlusselement 60a auf, wobei eines dieser beiden Anschlusselemente 60a den Zuleitungsanschluss 26 und das andere Anschlusselement 60a den Ausleitungsanschluss 28 aufweist. Diese Zuordnung soll keine einschränkende Wirkung haben. In entsprechend abgewandelter Weise können sich die beiden Anschlüsse an einem der beiden Anschlusselemente befinden. Es ist auch denkbar, dass lediglich ein Längselement ein Anschlusselement mit beiden Anschlüssen aufweist. In entsprechender Weise sollen diese Ausführungen auch für nachfolgend noch zu beschreibende Figuren gelten, sofern dies passend ist.

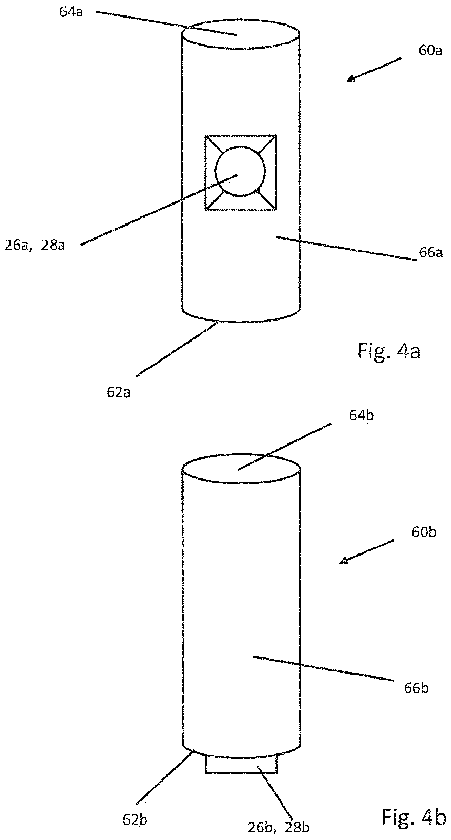

Fig. 4 besteht aus zwei Teilfiguren 4a und 4b, die jeweils ein zylinderförmig ausgebildetes Anschlusselement mit einer kreisförmigen Grundfläche zeigen. Beide Anschlusselemente 60a, 60b weisen einen Anschlusselementboden 62a, 62b, einen Anschlusselementdeckel 64a, 64b und einen Anschlusselementmantel 66a, 66b auf. Bei dem in Teilfigur 4a dargestellten Anschlusselement 60a ist der Zuleitungsanschluss 26a oder der Ausleitungsanschluss 28a in dem Anschlusselementmantel 66a angeordnet. Bei dieser Anordnungsart kann im verbauten Zustand vorgesehen sein, dass der jeweilige Anschluss 26a, 28a in Richtung der Längsachse 50 der Zellenreihe 16 zeigt. Teilfigur 4b zeigt eine alternative Anordnungsart, bei der der Zuleitungsanschluss 26b bzw. der Ausleitungsanschluss 28b in dem Anschlusselementboden 62b angeordnet ist. In einer weiteren alternativen Anordnungsart können die beiden Anschlüsse 26b, 28b auch in dem Anschlusselementdeckel 64b angeordnet sein.

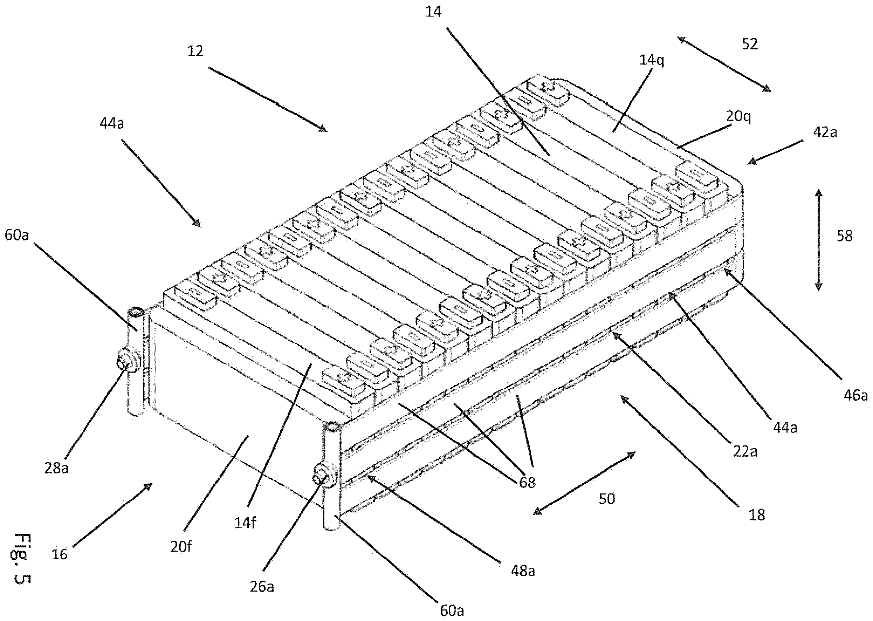

Fig. 5 zeigt eine zweite Ausführungsform eines Energiebereitstellungsmoduls 12. Auch bei dieser Ausführungsform sind die Energiebereitstellungszellen 14 zu einer einzigen Zellenreihe 16 angeordnet. Auch hier ist das Zugelement 22a aus einem Querelement 42a und zwei Längselementen 44a mit jeweils einem querelementseitigen Ende 46a und einem freien Ende 48a aufgebaut. Das Querelement 42a und die beiden Längselemente 44a bilden ein Zugelement 22a aus, das die Endplatte 20q umschließt. Bei dieser Ausführungsform sind sowohl das Querelement 42a als auch die beiden Längselemente 44a aus einer Vielzahl, im vorliegenden Fall aus drei baulich eigenständig ausgebildeten, strömungstechnisch parallel- oder gegenstromgeschalteten Wärmemittelkanäle 68 aufgebaut. Demzufolge weist das Zugelement 22a eine Vielzahl baulich eigenständig ausgebildeter, strömungstechnisch parallel- oder gegenstromgeschalteter Wärmemittelkanäle 68 auf. Auch hier liegen die beiden Längselemente 44a mit ihren freien Enden 48a seitlich an der Endplatte 20f an. Die Längselemente 44a und die Endplatte 20f können kraftschlüssig oder stoffschlüssig oder formschlüssig miteinander verbunden sein. Entsprechend Fig. 3 weisen die beiden Längselemente 44a an ihren freien Enden 48a jeweils ein Anschlusselement 60a auf, wobei eines dieser beiden Anschlusselemente den Zuleitungsanschluss 26a und das andere Anschlusselement 60 den Ausleitungsanschluss 28a aufweist.

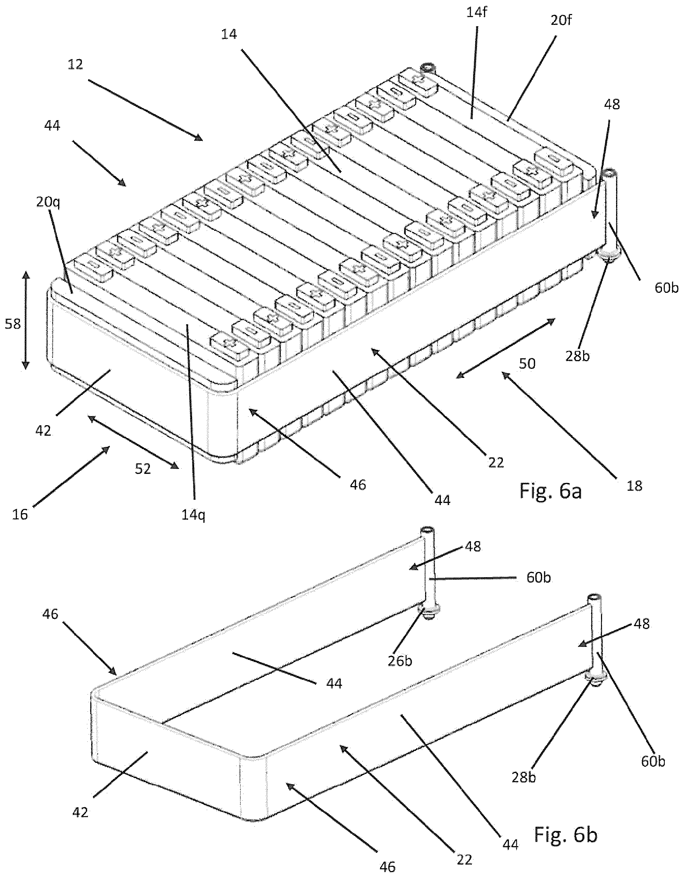

Fig. 6 zeigt anhand zweier Teilfiguren eine dritte Ausführungsform eines Energiebereitstellungsmoduls 12. Das in den beiden Teilfiguren 6a, 6b dargestellte Energiebereitstellungsmodul entspricht in seinem grundlegenden Aufbau dem in Fig. 3 dargestellten Energiebereitstellungsmodul, weswegen die im Zusammenhang mit Fig. 3 gemachten Ausführungen auch für das in den Teilfiguren 6a, 6b dargestellte Energiebereitstellungsmodul gelten sollen. Die beiden Energiebereitstellungsmodule unterscheiden sich dadurch, dass das in den Teilfiguren 6a, 6b dargestellte Energiebereitstellungsmodul 12 Anschlusselemente 60b aufweist, bei denen der Zuleitungsanschluss 26b und der Ausleitungsanschluss 28b im Anschlusselementboden angeordnet sind.

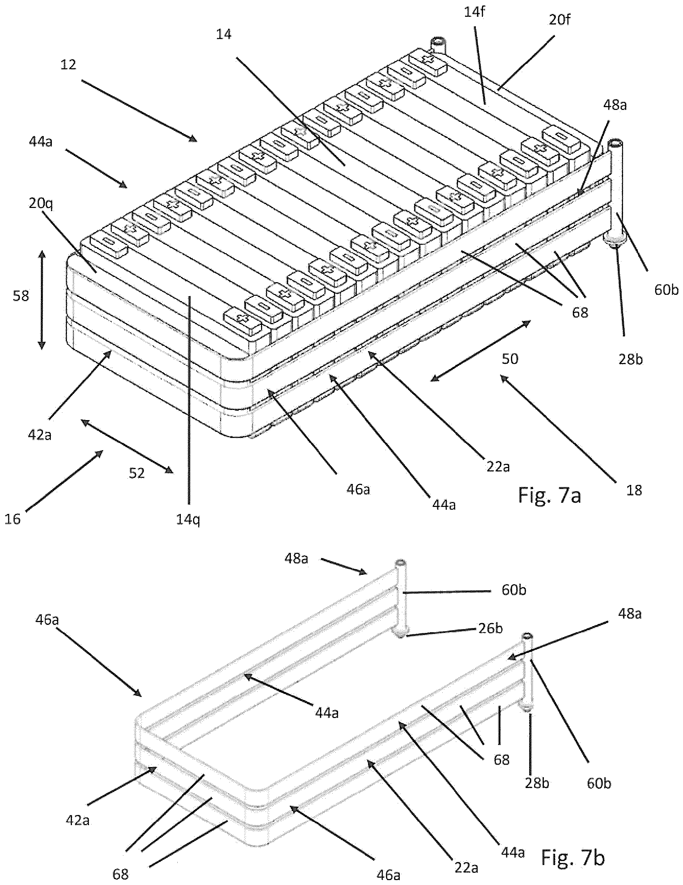

Fig. 7 zeigt anhand zweier Teilfiguren eine vierte Ausführungsform eines Energiebereitstellungsmoduls 12. Das in den beiden Teilfiguren 7a, 7b dargestellte Energiebereitstellungsmodul entspricht in seinem grundlegenden Aufbau dem in Fig. 5 dargestellten Energiebereitstellungsmodul, weswegen die im Zusammenhang mit Fig. 5 gemachten Ausführungen auch für das in den Teilfiguren 7a, 7b dargestellte Energiebereitstellungsmodul gelten sollen. Die beiden Energiebereitstellungsmodule unterscheiden sich dadurch, dass das in den Teilfiguren 7a, 7b dargestellte Energiebereitstellungsmodul 12 Anschlusselemente 60b aufweist, bei denen der Zuleitungsanschluss 26b und der Ausleitungsanschluss 28b im Anschlusselementboden angeordnet sind.

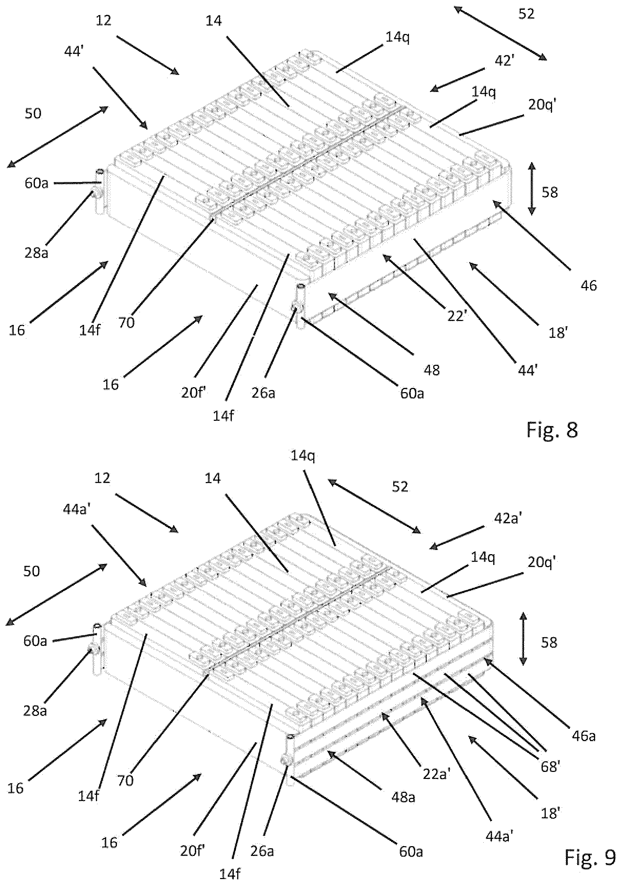

In den Fig. 3, 5, 6 und 7 sind Energiebereitstellungsmodule dargestellt, bei denen die Energiebereitstellungszellen jeweils zu einer einzigen Zellenreihe angeordnet sind. Wohingegen in den noch zu beschreibenden Fig. 8 und 9 die Energiebereitstellungszellen zu einer Vielzahl, konkret zu zwei in einer Ebene liegenden, nebeneinander angeordneten Zellenreihen angeordnet sind. Sowohl für den Fall der einzelnen Zellenreihe als auch für den Fall der nebeneinander angeordneten Zellenreihen ist für die in den vorgenannten Figuren dargestellten Energiebereitstellungsmodule das Zugelement aus einem Querelement und zwei Längselementen mit jeweils einem querelementseitigen Ende und einem freien Ende aufgebaut, wobei das Querelement und die beiden Längselemente ein Zugelement ausbilden, das zumindest eine Endplatte umschließt.

Fig. 8 zeigt eine fünfte Ausführungsform eines Energiebereitsellungsmoduls 12. Bei dieser Ausführungsform sind die Energiebereitstellungszellen 14 zu zwei Zellenreihe 16 angeordnet, wobei das Zugelement 22' aus einem Querelement 42' und zwei Längselementen 44' mit jeweils einem querelementseitigen Ende 46 und einem freien Ende 48 aufgebaut ist. Das Querelement 42' und die beiden Längselemente 44' bilden ein Zugelement 22' aus, das die Endplatte 20q' umschließt. In das Zugelement 22' ist mindestens ein nicht dargestellter, das Wärmemittel führender Wärmemittelkanal eingearbeitet. Die beiden Längselemente 44' liegen mit ihren freien Enden 48 seitlich an der Endplatte 20f' an. Die Längselemente 44' und die Endplatte 20f können kraftschlüssig oder stoffschlüssig oder formschlüssig miteinander verbunden sein. Zwischen den beiden Zellenreihen 16 ist ein Wärmeleitblech 70 angeordnet, mit dem es möglich ist, Wärme von denjenigen Seiten der Energiebereitstellungszellen, die dem zwischen den beiden Zellenreihen 16 befindlichen Zwischenraum zugewandt sind, den beiden Endplatten 20f', 20q' zuzuführen.

Wie der Darstellung in Fig. 8 zu entnehmen ist, weisen die beiden Längselemente 44' an ihren freien Enden 48 jeweils ein Anschlusselement 60a auf, wobei eines dieser beiden Anschlusselemente 60a den Zuleitungsanschluss 26a und das andere Anschlusselement 60a den Ausleitungsanschluss 28a aufweist. In entsprechender Weise sollen die im Zusammenhang mit Fig. 3 gemachten Ausführungen gelten.

Fig. 9 zeigt eine sechste Ausführungsform eines Energiebereitstellungsmoduls 12. Auch bei dieser Ausführungsform sind die Energiebereitstellungszellen 14 in zwei Zellenreihen 16 angeordnet. Auch hier ist das Zugelement 22a' aus einem Querelement 42a' und zwei Längselementen 44a' mit jeweils einem querelementseitigen Ende 46a und einem freien Ende 48a aufgebaut. Das Querelement 42a' und die beiden Längselemente 44a' bilden ein Zugelement 22a' aus, das die Endplatte 20q' umschließt. Bei dieser Ausführungsform sind sowohl das Querelement 42a' als auch die beiden Längselemente 44a' aus einer Vielzahl, im vorliegenden Fall aus drei baulich eigenständig ausgebildeten, strömungstechnisch parallel- oder gegenstromgeschalteten Wärmemittelkanäle 68' aufgebaut. Demzufolge weist das Zugelement 22a' eine Vielzahl baulich eigenständig ausgebildeter, strömungstechnisch parallel- oder gegenstromgeschalteter Wärmemittelkanäle 68' auf. Auch hier liegen die beiden Längselemente 44a' mit ihren freien Enden 48a seitlich an der Endplatte 20f' an. Die Längselemente 44a' und die Endplatte 20f' können kraftschlüssig oder stoffschlüssig oder formschlüssig miteinander verbunden sein. Entsprechend Fig. 8 weisen die beiden Längselemente 44a' an ihren freien Enden 48a jeweils ein Anschlusselement 60a auf, wobei eines dieser beiden Anschlusselemente 60a den Zuleitungsanschluss 26a und das andere Anschlusselement 60a den Ausleitungsanschluss 28a aufweist. Auch hier ist zwischen den beiden Zellenreihen 16 ein Wärmeleitblech 70 angeordnet.

Bei den beiden in den Fig. 8 und 9 dargestellten Ausführungsformen ist die freie Endplatte 20f' dergestalt ausgeführt, dass diese an zwei freien Energiebereitstellungszellen 14f anliegt, und die querelementseitige Endplatte 20q' ist dergestalt ausgeführt, dass diese an zwei querelementseitigen Energiebe-14q anliegt. Gemäß der Darstellung in den beiden Fig. 8 und 9 soll es sich bei dem Wärmeleitblech 70 um eine mit Blick auf die Wärmeübertragung passiv ausgebildete Komponente handeln. Alternativ ist die Verwendung einer aktiv ausgebildeten Komponente denkbar.

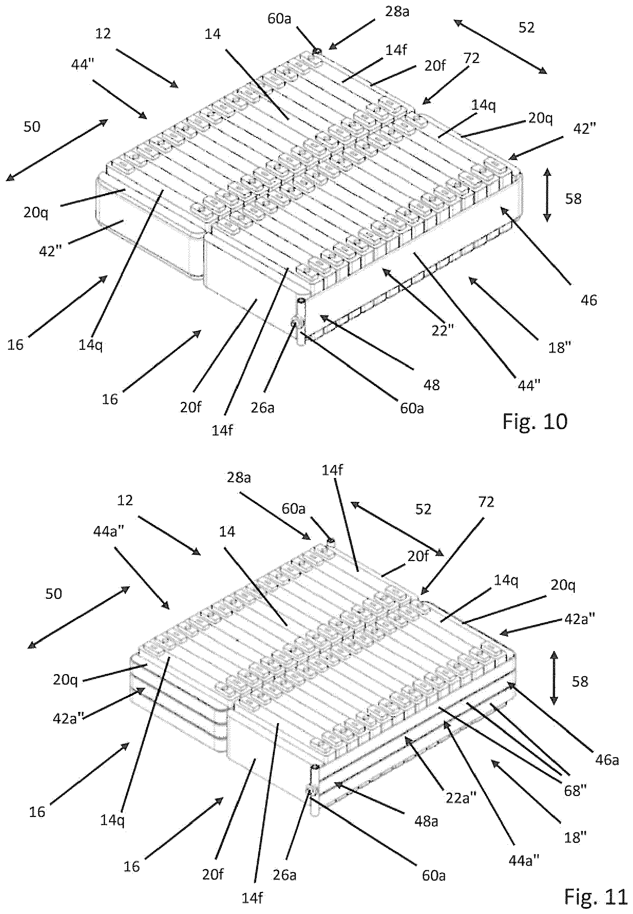

In den beiden nachfolgend noch zu beschreibenden Fig. 10 und 11 sind die Energiebereitstellungszellen 14 ebenfalls zu einer Vielzahl, konkret zu zwei in einer Ebene liegenden, nebeneinander angeordneten Zellenreihen 16 angeordnet. Allerdings ist bei diesen beiden Ausführungsformen das Zugeelement 22 mäanderförmig ausgebildet.

Bei dem in Fig. 10 dargestellten, gemäß einer siebten Ausführungsform aufgebauten Energiebereitstellungsmodul 12 ist das Zugelement 22" aus zwei Querelementen 42", zwei Längselementen 44" mit jeweils einem querelementseitigen Ende 46 und einem freien Ende 48 und einem (aufgrund der perspektivischen Darstellung schwer einsehbaren) weiteren Längselement 72 mit zwei (aufgrund der perspektivischen Darstellung schwer einsehbaren) querelementseitigen Enden aufgebaut. Vorteilhafterweise kann das weitere Längselement 72 dazu ausgebildet sein, ebenfalls von dem Wärmemittel durchströmt zu werden, d.h. es kann sich um eine hinsichtlich der Wärmeübertragung aktiv ausgebildete Komponente handeln. Alternativ ist es auch denkbar, das weitere Längselement passiv auszugestalten.

In Fig. 11 ist ein gemäß einer achten Ausführungsform aufgebautes Energiebereitstellungsmodul dargestellt, welches in seinem grundlegenden Aufbau dem in Fig. 10 dargestellten Energiebereitstellungsmodul entspricht, weswegen die im Zusammenhang mit Fig. 10 gemachten Ausführungen auch für das in Fig. 11 dargestellte Energiebereitstellungsmodul gelten sollen. Die beiden Energiebereitstellungsmodule unterscheiden sich dadurch, dass bei dem in Fig. 11 dargestellten Energiebereitstellungsmodul 12 sowohl die Querelemente 42a" als auch die beiden Längselemente 44a" aus einer Vielzahl, im vorliegenden Fall aus drei baulich eigenständig ausgebildeten, strömungstechnisch parallel- oder gegenstromgeschalteten Wärmemittelkanäle 68" aufgebaut ist. Demzufolge weist das Zugelement 22a" eine Vielzahl baulich eigenständig ausgebildeter, strömungstechnisch parallel- oder gegenstromgeschalteter Wärmemittelkanäle 68" auf.

Die in den Fig. 8, 9, 10 und 11 gewählte Darstellung, gemäß der bei den in diesen Figuren dargestellten Energiebereitstellungsmodulen Anschlusselemente 60a zum Einsatz kommen, bei denen sowohl der Zuleitungsanschluss 26a als auch der Ausleitungsanschluss 28a im Anschlusselementmantel angeordnet ist, soll keine einschränkende Wirkung haben. Selbstverständlich können auch Anschlusselemente zum Einsatz kommen, bei denen diese Anschlüsse im Anschlusselementboden und/oder im Anschlusselementdeckel angeordnet sind. Ferner soll die in den Fig. 8, 9, 10 und 11 gewählte Darstellung, gemäß der zwei Zellenreihen nebeneinander angeordnet sind, keine einschränkende Wirkung haben. Selbstverständlich können auch mehr als zwei Zellenreihen nebeneinander angeordnet sein.

### Bezugszeichenliste

- 10: Spannungsversorgungseinrichtung
- 12: Energiebereitstellungsmodul
- 14: Energiebereitstellungszelle
- 16: Zellenreihe
- 18: Verspanneinrichtung
- 20: Endplatten
- 22: Zugelement
- 24: Temperiereinrichtung
- 26: Zuleitungsanschluss
- 28: Ausleitungsanschluss
- 30: erste Leitung
- 32: Pfeil
- 34: zweite Leitung
- 36: Pfeil
- 38: Punkte
- 40: Wärmeleitkomponente
- 42: Querelement
- 44: Längselement
- 46: querelementseitiges Ende
- 48: freies Ende
- 50: Längsachse
- 52: Querachse
- 54: Länge
- 56: Breite
- 58: Höhe
- 60: Anschlusselement
- 62: Anschlusselementboden
- 64: Anschlusselementdeckel
- 66: Anschlusselementmantel
- 68: Wärmemittelkanal
- 70: Wärmeleitblech
- 72: weiteres Längselement

## Patentansprüche

1. Energiebereitstellungsmodul (12) für eine in einem Fahrzeug angeordnete Spannungsversorgungsvorrichtung (10), wobei das Energiebereitstellungsmodul (12) aus einer Vielzahl baulich eigenständig ausgeführter Energiebereitstellungszellen (14) aufgebaut ist, wobei die Vielzahl von Energiebereitstellungszellen (14) zu mindestens einer Zellenreihe (16) gestapelt, hintereinander angeordnet sind, wobei das Energiebereitstellungsmodul (12) mit einer Temperiereinrichtung (24) zusammenwirkt, wobei die Temperiereinrichtung (24) dazu ausgebildet ist, zumindest einen Teil der Energiebereitstellungszellen (14) mittels eines Wärmemittels zu temperieren, mit einer Verspanneinrichtung (18, 18', 18"), die dazu ausgebildet ist, die Energiebereitstellungszellen (14) der mindestens einen Zellenreihe (16) zu verspannen, wobei die Verspanneinrichtung (18, 18', 8") hierfür zumindest zwei Endplatten (20, 20f, 20q, 20f, 20q') und ein Zugelement (22, 22a, 22', 22a', 22", 22a") aufweist, wobei die mindestens zwei Endplatten (20, 20f, 20q, 20f, 20q') mit dem Zugelement (22, 22a, 22', 22a', 22", 22a") zum Ausbilden einer auf die Energiebereitstellungszellen (14) wirkenden Verspannkraft zusammenwirken, wobei das Zugelement (22, 22a, 22', 22a', 22", 22a") als funktionaler Bestandteil der Temperiereinrichtung (24) ausgeführt ist und zu diesem Zweck zumindest einen Zuleitungsanschluss (26, 26a, 26b) zum Zuleiten von Wärmemittel in das Zugelement (22, 22a, 22', 22a', 22", 22a") und zumindest einen Ausleitungsanschluss (28, 28a, 28b) zum Ausleiten des durch zumindest einen Teilbereich des Zugelements (22, 22a, 22', 22a', 22", 22a") geströmten Wärmemittels aufweist, **dadurch gekennzeichnet, dass** das Zugelement (22, 22a, 22', 22a', 22", 22a") U-förmig oder mäanderförmig ausgebildet ist und aus zumindest einem Querelement (42, 42a, 42*, 42a', 42", 42a") und zumindest zwei monolithisch mit dem Querelement (42, 42a, 42*, 42a', 42", 42a") hergestellten Längselementen (44, 44a, 44', 44a', 44", 44a") mit jeweils einem querelementseitigen Ende (46, 46a) und einem freien Ende (48, 48a) aufgebaut ist, wobei der Zuleitungsanschluss (26, 26a, 26b) und der Ausleitungsanschluss (28, 28a, 28b) räumlich den freien Enden (48, 48a) zugeordnet sind, wobei der Zuleitungsanschluss (26, 26a, 26b) dem freien Ende (48, 48a) des einen Längselements (44, 44a, 44', 44a', 44", 44a") und der Ausleitungsanschluss (28, 28a, 28b) dem freien Ende (48, 48a) des anderen Längselements (44, 44a, 44', 44a', 44", 44a") zugeordnet ist, und wobei das Zugelement (22, 22a, 22', 22a', 22", 22a") mindestens einen das Wärmemittel führenden, mit dem Zuleitungsanschluss (26, 26a, 26b) und dem Ausleitungsanschluss (28, 28a, 28b) verbundenen Wärmemittelkanal (68, 68', 68") aufweist, der derart ausgebildet ist, dass er die Zellreihe (16) entlang der beiden Längselemente (44, 44a, 44', 44a', 44", 44a") und des Querelements (42, 42a, 42*, 42a', 42", 42a") umschließt.

2. Energiebereitstellungsmodul (12) nach Anspruch 1, **dadurch gekennzeichnet, dass** das Zugelement (22a, 22a', 22a") eine Vielzahl baulich eigenständig ausgebildeter, strömungstechnisch parallel- oder gegenstromgeschalteter Wärmemittelkanäle (68, 68', 68") aufweist.

3. Energiebereitstellungsmodul (12) nach Anspruch 1 oder 2, **dadurch gekennzeichnet, dass** zumindest eines der beiden Längselemente (44, 44a, 44', 44a', 44", 44a") ein an seinem freien Ende (48, 48a) angeordnetes Anschlusselement (60a, 60b) aufweist, wobei das Anschlusselement (60a, 60b) den zumindest einen Zuleitungsanschluss (26, 26a, 26b) und/oder den zumindest einen Ausleitungsanschluss (28, 28a, 28b) aufweist.

4. Energiebereitstellungsmodul (12) nach Anspruch 3, **dadurch gekennzeichnet, dass** das Anschlusselement (60a, 60b) zylinderförmig mit einem Anschlusselementboden (62a, 62b), einem Anschlusselementdeckel (64a, 64b) und einem Anschlusselementmantel (66a, 66b) ausgebildet ist, wobei sich der zumindest eine Zuleitungsanschluss (26, 26a, 26b) und/oder der zumindest eine Ausleitungsanschluss (28, 28a, 28b) in dem Anschlusselementboden (62a, 62b) oder dem Anschlusselementmantel (66a, 66b) oder dem Anschlusselementdeckel (64a, 64b) befindet.

5. Energiebereitstellungsmodul (12) nach einem der Ansprüche 1 bis 4, **dadurch gekennzeichnet, dass** jede der Zellenreihen (16) eine querelementseitige Energiebereitstellungszelle (14q) und eine freie Energiebereitstellungszelle (14f) aufweist, wobei eine der beiden Endplatten (20, 20f, 20q, 20f, 20q') als querelementseitige Endplatte (20q, 20q') an der querelementseitigen Energiebereitstellungszelle (14q) und die andere Endplatte als freie Endplatte (20f, 20f) an der freien Energiebereitstellungszelle (14f) anliegt, wobei die querelementseitige Endplatte (20q, 20q') dazu ausgebildet ist, in der Zellenreihe (16) auftretende Längentoleranzen auszugleichen.

6. Energiebereitstellungsmodul (12) nach einem der Ansprüche 1 bis 5, **dadurch gekennzeichnet, dass** die Energiebereitstellungszellen (14) zu einer einzigen Zellen reihe (16) oder zu einer Vielzahl von in einer Ebene liegenden, nebeneinander angeordneten Zellenreihen (16) angeordnet sind, wobei das Zugelement (22, 22a, 22', 22a', 22", 22a") aus einem Querelement (42, 42a, 42', 42a', 42", 42a") und zwei Längselementen (44, 44a, 44', 44a', 44", 44a") mit jeweils einem querelementseitigen Ende (46, 46a) und einem freien Ende (48, 48a) aufgebaut ist, wobei das Querelement (42, 42a, 42', 42a', 42", 42a") und die beiden Längselemente (44, 44a, 44', 44a', 44", 44a") ein Zugelement (22, 22a, 22', 22a1, 22", 22a") ausbilden, das eine der beiden Endplatten (20, 20q, 20q') umschließt.

7. Energiebereitstellungsmodul (12) nach einem der Ansprüche 1 bis 5, **dadurch gekennzeichnet, dass** die Energiebereitstellungszeilen (14) zu einer Vielzahl von in einer Ebene liegenden, nebeneinander angeordneten Zellenreihen (16) angeordnet sind, wobei das Zugelement (22", 22a") aus mindestens zwei Querelementen (42", 42a"), zwei Längselementen (44", 44a") mit jeweils einem querelementseitigen Ende (46, 46a) und einem freien Ende (48, 48a) und mindestens einem weiteren Längselement (72) mit zwei querelementseitigen Enden aufgebaut ist, wobei die Querelemente (42", 42a"), die Längselemente (44", 44a") und das mindestens eine weitere Längselemente (72) ein mäanderförmiges Zugelement (22", 22a") ausbilden.

8. Energiebereitstellungsmodul (12) nach Anspruch 7, **dadurch gekennzeichnet, dass** das weitere Längselement (72) dazu ausgebildet ist, ebenfalls von dem Wärmemittel durchströmt zu werden.

9. Energiebereitstellungsmodul (12) nach Anspruch 7 oder 8, **dadurch gekennzeichnet, dass** die Längselemente (44, 44a, 44', 44a', 44", 44a") mit ihren freien Enden (48, 48a) an der jeweils zugeordneten Endplatte (20f, 20f) seitlich anliegen.

10. Energiebereitstellungsmodul (12) nach einem der vorstehenden Ansprüche, **dadurch gekennzeichnet, dass** das Zugelement (22, 22a, 22', 22a', 22", 22a") über eine Wärmeleitkomponente (40) an den Energiebereitstellungszellen (14) anliegt.

## Claims

1. A power supply module (12) for a voltage supply device (10) arranged in a vehicle, wherein the power supply module (12) is constructed from a large number of structurally independent power supply cells (14), wherein the large number of power supply cells (14), stacked to form at least one row of cells (16), are arranged one behind another, wherein the power supply module (12) cooperates with a temperature control means (24), wherein the temperature control means (24) is designed to control the temperature of at least some of the power supply cells (14) by means of a heating medium, with a bracing means (18, 18', 18") which is designed to brace the power supply cells (14) of the at least one row of cells (16), wherein the bracing means (18, 18', 8") for this has at least two end plates (20, 20f, 20q, 20f, 20q') and a tensioning element (22, 22a, 22', 22a', 22", 22a"), wherein the at least two end plates (20, 20f, 20q, 20f, 20q') cooperate with the tensioning element (22, 22a, 22', 22a', 22", 22a") to form a bracing force acting on the power supply cells (14), wherein the tensioning element (22, 22a, 22', 22a', 22", 22a") is embodied as a functional component of the temperature control means (24) and to this end has at least one infeed connection (26, 26a, 26b) for feeding heating medium into the tensioning element (22, 22a, 22', 22a', 22", 22a") and at least one discharge connection (28, 28a, 28b) for discharging the heating medium which has flowed through at least a partial region of the tensioning element (22, 22a, 22', 22a', 22", 22a"), **characterised in that** the tensioning element (22, 22a, 22', 22a', 22", 22a") is designed to be U-shaped or meandering and is constructed from at least one transverse element (42, 42a, 42*, 42a', 42", 42a") and at least two longitudinal elements (44, 44a, 44', 44a', 44", 44a"), produced monolithically with the transverse element (42, 42a, 42*, 42a', 42", 42a"), with in each case one end (46, 46a) on the transverse-element side and one free end (48, 48a), the infeed connection (26, 26a, 26b) and the discharge connection (28, 28a, 28b) being associated spatially with the free ends (48, 48a), the infeed connection (26, 26a, 26b) being associated with the free end (48, 48a) of the one longitudinal element (44, 44a, 44', 44a', 44", 44a") and the discharge connection (28, 28a, 28b) with the free end (48, 48a) of the other longitudinal element (44, 44a, 44', 44a', 44", 44a"), and the tensioning element (22, 22a, 22', 22a', 22", 22a") having at least one heating-medium channel (68, 68', 68") carrying the heating medium and connected to the infeed connection (26, 26a, 26b) and the discharge connection (28, 28a, 28b), which channel is designed such that it encompasses the row of cells (16) along the two longitudinal elements (44, 44a, 44', 44a', 44", 44a") and the transverse element (42, 42a, 42*, 42a', 42", 42a").

2. A power supply module (12) according to Claim 1, **characterised in that** the tensioning element (22a, 22a', 22a") has a large number of structurally independent heating-medium channels (68, 68', 68") which are connected fluidically in a parallel or countercurrent flow.

3. A power supply module (12) according to Claim 1 or Claim 2, **characterised in that** at least one of the two longitudinal elements (44, 44a, 44', 44a', 44", 44a") has a connection element (60a, 60b) arranged at its free end (48, 48a), the connection element (60a, 60b) having the at least one infeed connection (26, 26a, 26b) and/or the at least one discharge connection (28, 28a, 28b).

4. A power supply module (12) according to Claim 3, **characterised in that** the connection element (60a, 60b) is designed cylindrically with a connection-element base (62a, 62b), a connection-element cover (64a, 64b) and a connection-element casing (66a, 66b), the at least one infeed connection (26, 26a, 26b) and/or the at least one discharge connection (28, 28a, 28b) being located in the connection-element base (62a, 62b) or the connection-element casing (66a, 66b) or the connection-element cover (64a, 64b).

5. A power supply module (12) according to one of Claims 1 to 4, **characterised in that** each of the rows of cells (16) has a power supply cell (14q) on the transverse-element side and a free power supply cell (14f), with one of the two end plates (20, 20f, 20q, 20f, 20q') resting as an end plate (20q, 20q') on the transverse-element side against the power supply cell (14q) on the transverse-element side, and the other end plate resting as a free end plate (20f, 20f) against the free power supply cell (14f), the end plate (20q, 20q') on the transverse-element side being designed to compensate for length tolerances occurring in the row of cells (16).

6. A power supply module (12) according to one of Claims 1 to 5, **characterised in that** the power supply cells (14) are arranged to form a single row of cells (16) or to form a large number of rows of cells (16) lying in one plane and arranged next to one another, the tensioning element (22, 22a, 22', 22a', 22", 22a") being constructed from a transverse element (42, 42a, 42', 42a', 42", 42a") and two longitudinal elements (44, 44a, 44', 44a', 44", 44a") with in each case one end (46, 46a) on the transverse-element side and one free end (48, 48a), the transverse element (42, 42a, 42', 42a', 42", 42a") and the two longitudinal elements (44, 44a, 44', 44a', 44", 44a") forming a tensioning element (22, 22a, 22', 22a', 22", 22a") which encompasses one of the two end plates (20, 20q, 20q').

7. A power supply module (12) according to one of Claims 1 to 5, **characterised in that** the power supply cells (14) are arranged to form a large number of rows of cells (16) lying in one plane and arranged next to one another, the tensioning element (22", 22a") being constructed from at least two transverse elements (42", 42a"), two longitudinal elements (44", 44a") with in each case one end (46, 46a) on the transverse-element side and one free end (48, 48a) and at least one further longitudinal element (72) with two ends on the transverse-element side, the transverse elements (42", 42a"), the longitudinal elements (44", 44a") and the at least one further longitudinal elements (72) forming a meandering tensioning element (22", 22a").

8. A power supply module (12) according to Claim 7, **characterised in that** the further longitudinal element (72) is designed likewise for the heating medium to flow through.

9. A power supply module (12) according to Claim 7 or Claim 8, **characterised in that** the longitudinal elements (44, 44a, 44', 44a', 44", 44a") laterally rest against the respective associated end plate (20f, 20f) with their free ends (48, 48a).

10. A power supply module (12) according to one of the preceding claims, **characterised in that** the tensioning element (22, 22a, 22', 22a', 22", 22a") rests against the power supply cells (14) by way of a heat-conduction component (40).

## Revendications

1. Module d'approvisionnement en énergie (12) destiné à un dispositif d'alimentation en tension (10) installé dans un véhicule, ce module d'approvisionnement en énergie (12) étant constitué par un ensemble de cellules d'approvisionnement en énergie (14) structurellement indépendantes, les cellules d'approvisionnement en énergie de l'ensemble de cellules d'approvisionnement en énergie (14) étant installées les unes derrière les autres en étant empilées selon au moins une rangée de cellules (16), le module d'approvisionnement en énergie (12) coopérant avec un dispositif de mise en température (24), le dispositif de mise en température (24) étant réalisé pour permettre de mettre en température au moins une partie des cellules d'approvisionnement en énergie (14) au moyen d'un fluide thermique, avec un dispositif de serrage (18, 18', 18") réalisé pour serrer les cellules d'approvisionnement en énergie (14) de la rangée (16), le dispositif de serrage (18, 18', 18") comportant à cet effet au moins deux plaques d'extrémité (20, 20f, 20q, 20f', 20q') et un élément de traction (22, 22a, 22', 22a', 22", 22a"), les deux plaques d'extrémité (20, 20f, 20q, 20f', 20q') coopérant avec l'élément de traction (22, 22a, 22', 22a', 22", 22a") pour créer une force de serrage agissant sur les cellules d'approvisionnement en énergie (14), l'élément de traction (22, 22a, 22', 22a', 22", 22a") étant réalisé sous la forme d'un composant fonctionnel du dispositif de mise en température (24), et comportant à cet effet au moins une connexion à une conduite d'entrée (26, 26a, 26b) du fluide thermique dans l'élément de traction (22, 22a, 22', 22a', 22", 22a") et au moins une connexion à une conduite d'évacuation (28, 28a, 28b) du fluide thermique circulant au travers d'au moins une zone partielle de l'élément de traction (22, 22a, 22', 22a', 22", 22a"),
**caractérisé en ce que**
l'élément de traction (22, 22a, 22', 22a', 22", 22a") est en forme de U ou en forme de méandre et est constitué d'au moins un élément transversal (42, 42a, 42', 42a', 42", 42a") et d'au moins deux éléments longitudinaux (44, 44a, 44', 44a', 44", 44a") fabriqués de façon monolithique avec l'élément transversal (42, 42a, 42', 42a', 42", 42a") et ayant chacun une extrémité situé côté élément transversal (46, 46a) et une extrémité libre (48, 48a), la connexion à la conduite d'entrée (26, 26a, 26b) et la connexion à la conduite d'évacuation (28, 28a, 28b) étant spatialement associées aux extrémités libres (48, 48a), la connexion à la conduite d'entrée (26, 26a, 26b) étant associée à l'extrémité libre (48, 48a) de l'un des éléments longitudinaux (44, 44a, 44', 44a', 44", 44a") et la connexion à la conduite d'évacuation (28, 28a, 28b) étant associée à l'extrémité libre (48, 48a) de l'autre élément longitudinal (44, 44a, 44', 44a', 44", 44a"), et l'élément de traction (22, 22a, 22', 22a', 22", 22a") comportant au moins un canal (68, 68', 68") dans lequel circule le fluide thermique, relié à la connexion à la conduite d'entrée (26, 26a, 26b) et à la connexion à la conduite d'évacuation (28, 28a, 28b), et qui est réalisé de façon à entourer la rangée de cellules (16) le long des deux éléments longitudinaux (44, 44a, 44', 44a', 44", 44a") et de l'élément transversal (42, 42a, 42', 42a', 42", 42a").

2. Module d'approvisionnement en énergie (12) conforme à la revendication 1,
**caractérisé en ce que**
l'élément de traction (22, 22a', 22a") comprend un ensemble de canaux de circulation du fluide thermique (68, 68', 68") structurellement indépendants, et branchés par la technique de circulation en parallèle ou à contre courant.

3. Module d'approvisionnement en énergie (12) conforme à la revendication 1 ou 2,
**caractérisé en ce qu'**
au moins l'un des deux éléments longitudinaux (44, 44a, 44', 44a', 44", 44a") comporte un élément de connexion (60a, 60b) installé à son extrémité libre (48, 48a), l'élément de connexion (60a, 60b) comprenant la connexion à la conduite d'entrée (26, 26a, 26b) et/ou la connexion à la conduite d'évacuation (28, 28a, 28b).

4. Module d'approvisionnement en énergie (12) conforme à la revendication 3,
**caractérisé en ce que**
l'élément de connexion (60a, 60b) est réalisé sous la forme d'un cylindre comportant un corps d'élément de connexion (62a, 62b), un couvercle d'élément de connexion (64a, 64b) et une enveloppe d'élément de connexion (66a, 66b), la connexion à la conduite d'entrée (26, 26a, 26b) et/ou la connexion à la conduite d'évacuation (28, 28a, 28b) étant située(s) dans le corps de l'élément de connexion (62a, 62b) ou dans l'enveloppe de l'élément de connexion (66a, 66b) ou dans le couvercle de l'élément de connexion (64a, 64b).

5. Module d'approvisionnement en énergie (12) conforme à l'une des revendications 1 à 4,
**caractérisé en ce que**
chacune des rangées de cellules (16) comporte une cellule d'approvisionnement en énergie (14q) située du côté de l'élément transversal et une cellule d'approvisionnement en énergie libre (14f), l'une des deux plaques d'extrémité (20, 20f, 20q, 20f', 20q') s'appliquant en tant que plaque d'extrémité située du côté de l'élément transversal (20q, 20q') sur la cellule d'approvisionnement en énergie (14q) située du côté de l'élément transversal et l'autre plaque d'extrémité s'appliquant en tant que plaque d'extrémité libre (20f, 20f') sur la cellule d'approvisionnement en énergie libre (14f), la plaque d'extrémité (20q, 20q') située du côté de l'élément transversal étant réalisée pour permettre de compenser des tolérances de longueur apparaissant dans la rangée de cellules (16).

6. Module d'alimentation en énergie (12) conforme à l'une des revendications 1 à 5,
**caractérisé en ce que**
les cellules d'approvisionnement en énergie (14) sont installées selon une seule rangée de cellules (16) ou selon un ensemble de rangées de cellules (16) installées côte à côte, situées dans un plan, l'élément de traction (22, 22a, 22', 22a', 22", 22a") étant constitué d'un élément transversal (42, 42a, 42', 42a', 42", 42a") et de deux éléments longitudinaux (44, 44a, 44', 44a', 44", 44a") ayant chacun une extrémité (46, 46a) située du côté de l'élément transversal et une extrémité libre (48, 48a), l'élément transversal (42, 42a, 42', 42a', 42", 42a") et les deux éléments longitudinaux (44, 44a, 44', 44a', 44", 44a") formant un élément de traction (22, 22a, 22', 22a', 22", 22a") qui entoure l'une des deux plaques d'extrémité (20, 20q, 20q').

7. Module d'alimentation en énergie (12) conforme à l'une des revendications 1 à 5,
**caractérisé en ce que**
les cellules d'approvisionnement en énergie (14) sont installées selon un ensemble de rangées de cellules (16) situées côte à côte, dans un plan, l'élément de traction (22", 22a") étant constitué par au moins deux éléments transversaux (42", 42a"), deux éléments longitudinaux (44", 44a") ayant chacun une extrémité (46, 46a) située du côté de l'élément transversal et une extrémité libre (48, 48a), et au moins un autre élément longitudinal (72) ayant deux extrémités situées du côté de l'élément transversal, les éléments transversaux (42", 42a"), les éléments longitudinaux (44", 44a") et l'autre élément longitudinal (72) formant un élément de traction (22", 22a") en forme de méandres.

8. Module d'approvisionnement en énergie (12) conforme à la revendication 7,
**caractérisé en ce que**
l'autre élément longitudinal (72) est aussi traversé par le fluide thermique.

9. Module d'approvisionnement en énergie (12) conforme à la revendication 7 ou 8,
**caractérisé en ce que**
les éléments longitudinaux (44, 44a, 44', 44a', 44", 44a") s'appliquent latéralement par leurs extrémités libres (48, 48a) sur la plaque d'extrémité (20f, 20f) respectivement associée.

10. Module d'approvisionnement en énergie (12) conforme à l'une des revendications précédentes,
**caractérisé en ce que**
l'élément de traction (22, 22a, 22', 22a', 22", 22a") s'applique sur les cellules d'approvisionnement en énergie (14) par l'intermédiaire d'un composant thermiquement conducteur (40).
